# EUROPÄISCHE PATENTSCHRIFT

(11) **EP 2 425 182 B1**
(45) Veröffentlichungstag und Bekanntmachung des Hinweises auf die Patenterteilung: **10.06.2015**
(21) Anmeldenummer: 10719294.0
(22) Anmeldetag: 20.04.2010
(51) Int. Cl.: F24C 7/08

(54) **VERFAHREN ZUM BETREIBEN EINES HAUSHALTSGERÄTS**
METHOD FOR OPERATING A HOUSEHOLD APPLIANCE
PROCÉDÉ POUR FAIRE FONCTIONNER UN APPAREIL MÉNAGER

(30) Priorität: 30.04.2009 DE 102009002774
(43) Veröffentlichungstag der Anmeldung: 07.03.2012
(73) Patentinhaber: BSH Hausgeräte GmbH, 81739 München (DE)
(72) Erfinder: EHRENSBERGER, Julia, 81541 München (DE); RIESER, Frank, 82194 Gröbenzell (DE)
(86) Internationale Anmeldenummer: PCT/EP2010/055180
(87) Internationale Veröffentlichungsnummer: WO 2010/124966

(56) Entgegenhaltungen:
- EP-A2- 0 802 465
- EP-A2- 1 349 281
- DE-T2- 69 307 480

## Beschreibung

Die Erfindung betrifft ein Verfahren zum Betreiben eines Haushaltsgeräts.

Zur Bedienung eines Haushaltsgeräts weist dieses häufig ein in eine Bedienblende integriertes Bedien- und Anzeigenfeld auf.

Alternativ ist eine portable Bedieneinheit bekannt, welche an ein Haushaltsgerät andockbar ist und welche in der Lage ist, sämtliche dazu ausgestalteten Haushaltsgeräte in der Nähe gleichzeitig zu bedienen. Diese Bedieneinheit kann auch getrennt von einem Haushaltsgerät angeordnet werden und die Haushaltsgeräte entsprechend aus der Entfernung ("remote") bedienen.

Es sind ferner stationäre zentrale Bedienanlagen zur Bedienung mehrerer Haushaltsgeräte bekannt.

Es ist auch bekannt, Haushaltsgeräte von einem Computer, einem elektronischen Handheldgerät oder von einem Mobiltelefon aus zu bedienen.

DE 693 07 480 T2 offenbart einen Schalter zum Steuern des elektrischen Ein- oder Ausschaltens eines Elements, besonders Heizelements, durch eine keine Bohrung aufweisende bandförmige Tafel oder Platte aus Glas eines Haushalts-Kochgeräts hindurch, um das Kippen mindestens eines Relais , das einen dieses Element enthaltenden elektrischen Schaltkreis öffnet oder schließt, mittels eines Permanentmagneten zu bewirken, wobei dieses Relais ein in einem festen Chassis gegen die zum Inneren des Geräts gelegenen Seite der Glasplatte unbeweglich montiertes Magnetrelais ist und der Schalter einen Schaltknopf aufweist, der gegen die entgegengesetzte Seite der Platte anliegt, die nach außen gerichtet und für den Benutzer des Geräts zugänglich ist, dadurch gekennzeichnet, daß dieser Schaltknopf gegenüber der Platte um einen Zapfen frei drehbar ist, dessen Anordnung auf der Fläche derselben so festgelegt ist, daß der Schaltknopf in der Nähe des gegen die andere Seite montierten Relais angeordnet ist, und der Schaltknopf in einer durch den Zapfen gehenden Ebene radial versetzt den Permanentmagneten in der Weise aufweist, dass der Magnet bei Drehung des Schaltknopfes auf dem Zapfen in eine Stellung geradlinig gegenüber dem Relais gebracht wird und das automatische Kippen und Schließen desselben bewirkt, oder gegenüber diesem Relais verschoben wird, wodurch dieses automatisch in den Öffnungszustand zurückkehrt, wobei der Zapfen die Anordnung des Schaltknopfes festlegt, der um ihn drehbar ist, und mit einer offenen Aufnahme zusammenwirkt, die in der Mitte des Schaltknopfs in seiner gegen die Platte anliegenden Fläche hohl ausgebildet ist.

EP 1 349 281 A2 offenbart eine Bedieneinheit mit einem Drehknebel, welche eine integrierte Lagervorrichtung aufweist. Mit dieser Lagervorrichtung ist die Bedieneinheit magnetisch an einer Abdeckung befestigbar. Die Bedieneinheit weist eine Steuerung mit einem Mikroprozessor auf zur Auswertung von magnetischen Signalmitteln, welche eine Drehung des Drehknebels gegenüber der Lagervorrichtung feststellen. Durch einen ersten Übertrager in der Bedieneinheit und einen zweiten Übertrager an der Unterseite der Abdeckung können eine Signalübertragung sowie eine Energieübertragung zwischen Bedieneinheit und Elektrogerät erfolgen.

EP 0 802 465 A2 offenbart ein elektrisches Hausgerät, wie einen Geschirrspüler, einen Wäschetrockner, eine Waschmaschine, eine Beleuchtungseinrichtung, eine Heizungssteuerung oder dergleichen wobei über eine am oder im Hausgerät angeordnete Schnittstelle an ein zu mehreren Hausgeräten geführtes, von einem einzigen zentralen Steuerrechner steuerbares Bussystem anschließbar ist, wobei die Schnittstelle mit einem Busanschlussbaustein zur Übertragung von Steuerbefehlen und/oder Steuersignalen zwischen dem Bussystem und dem Hausgerät verbunden ist. Das Hausgerät ist mit einem Steckplatz zum lösbaren Anstecken des Steuerrechners versehen. Eine die Verbindung des angesteckten Steuerrechners mit der Schnittstelle herstellende Kontaktanordnung ist am Steckplatz angeordnet. Da der Steuerrechner auch an Steckplätzen anderer am Bussystem angeschlossener Hausgeräte angesteckt werden kann, wird eine große Flexibilität erreicht. Durch Umstecken des Steuerrechners kann die gesamte Anlage daher von verschiedenen Stellen aus gesteuert werden. Der Steuerrechner benötigt dabei keinen besonderen Platz, sondern ist im eingesteckten Zustand in einem der Hausgeräte integriert. Es ist die Aufgabe der vorliegenden Erfindung, eine einfach implementierbare Möglichkeit zur Bedienung von Haushaltsgeräten bereitzustellen, welche eine bequeme Reinigbarkeit der Haushaltsgeräte ermöglicht.

Diese **Aufgabe** wird gemäß den Merkmalen des unabhängigen Anspruchs gelöst. Bevorzugte Ausführungsformen sind den abhängigen Ansprüchen entnehmbar.

Das Verfahren dient zum Betreiben eines Haushaltsgeräts und weist die Schritte gemäss Anspruch 1 auf.

Im Gegensatz zu den Haushaltsgeräten mit dem integrierten Bedien- und Anzeigenfeld kann hier durch die grundsätzliche einfache und schnelle Abnehmbarkeit der Bedieneinheit eine bessere Reinigbarkeit des Haushaltsgeräts erreicht werden. Auch kann eine ruhigere, hochwertigere Gestaltung der zugehörigen Oberfläche erreicht werden. Ferner lassen sich die jeweiligen integrierten Bedien- und Anzeigenfelder einsparen, was besonders kostengünstige Haushaltsgeräte ermöglicht.

Im Gegensatz zu Computern, Handheld-Geräten usw. ist durch die automatische Erkennung des Haushaltsgeräts nach dem Andocken zur Aktivierung der portablen Bedieneinheit keine für einen Benutzer eines Haushaltsgeräts vergleichsweise ungewohnte und komplexe Interaktion (kein Aufruf bestimmter Programme, keine Freischaltung von Kommunikationsleitungen usw.) notwendig. Auch ist die portable Bedieneinheit weit einfacher und fehlerunanfälliger ausgestaltbar.

Im Gegensatz zu einer portablen Bedieneinheit, welche in der Lage ist, mehrere Haushaltsgeräte gleichzeitig zu bedienen, ist die portable Bedieneinheit durch die Konzentration auf die Bedienung nur eines Haushaltsgerät weit einfacher ausgestaltbar und somit preiswerter herzustellen. So braucht in der portablen Bedieneinheit keine Möglichkeit für eine Mehrgeräte-Kommunikation vorgesehen zu werden. Bei der Bedienung nur eines Haushaltsgeräts kann insbesondere auf eine Vernetzung der Haushaltsgeräte verzichtet werden. Auch wird die Bedienung übersichtlicher.

Das erfindungsgemässe Verfahren weist folgenden Schritt auf: Abdocken oder Entfernen der portablen Bedieneinheit von dem Haushaltsgerät und dadurch Ausschalten des Haushaltsgeräts. So kann verhindert werden, dass auf eine unerwünschte Handlung oder eine Fehlfunktion des Haushaltsgeräts nicht rechtzeitig reagiert werden kann.

Die portable Bedieneinheit ist aufgrund ihrer potenziellen Verwendung mit mehreren Haushaltsgeräten in hohen Stückzahlen und damit besonders preiswert herstellbar.

Die portable Bedieneinheit weist einem Bildschirm auf. Bedienelemente können Schalter, Taster, Slider usw. umfassen, Anzeigenelemente können LED-Bildschirme, LCD-Bildschirme, TFT-Bildschirme, Segmentanzeigen usw. umfassen, und zwar auch berührungsempfindliche Bildschirme (Touchscreens).

Ein Konfigurieren umfasst eine Anzeige entsprechender Bedienoberflächen.

Bei der Konfiguration wird somit die portable Bedieneinheit so konfiguriert, dass sie nur das Haushaltsgerät bedienen kann, an dem sie gerade angedockt ist. Durch das Andockmittel kann insbesondere sowohl eine Befestigung der portablen Bedieneinheit an dem Haushaltsgerät als auch eine funktionale Kopplung mit dem Haushaltsgerät hergestellt werden.

Es kann eine Weiterbildung sein, dass das Andockmittel eine drahtgebundene externe Schnittstelle umfasst. Dadurch ist eine besonders einfach zu implementierende und störsichere Verbindung zwischen der portablen Bedieneinheit und dem Haushaltsgerät herstellbar. Diese drahtgebundene externe Schnittstelle kann eine proprietäre Schnittstelle oder eine standardisierte Schnittstelle, wie eine USB-Schnittstelle, sein.

Es kann auch eine Weiterbildung sein, dass das Andockmittel eine kurzreichweitige drahtlose externe Schnittstelle umfasst. Durch die kurze Reichweite, z. B. von bis zu 2 cm bis 10 cm, kann ein Übersprechen mit anderen Kommunikationskanälen vermieden werden. Die drahtlose externe Schnittstelle kommt ohne ein körperliches Verbindungselement (Stecker usw.) aus und ist folglich besonders einfach zu reinigen und optisch unauffällig.

Gemäß noch einer Weiterbildung kann die portable Bedieneinheit ein Energieaufnahmemittel aufweisen. Die portable Bedieneinheit kann über das Energieaufnahmemittel mit Energie versorgt werden, z.B. zur Sicherstellung eines laufenden Betriebs und / oder zur Aufladung eines Akkumulators. Das Energieaufnahmemittel kann in das Andockmittel integriert oder damit funktional verbunden sein. Bei einer Integration oder einer funktionalen Verbindung mit der drahtgebundenen externen Schnittstelle kann dazu als das Energieaufnahmemittel ein Stromversorgungsanschluss vorgesehen sein. Bei einer Integration oder einer funktionalen Verbindung mit der drahtlosen externen Schnittstelle kann beispielsweise Energie durch ein entsprechendes elektromagnetisches Feld von dem Haushaltsgerät auf die portable Bedieneinheit übertragen werden, wobei die portable Bedieneinheit als das Energieaufnahmemittel mindestens eine Induktionsspule aufweisen kann.

Es kann noch eine Ausgestaltung sein, dass die portable Bedieneinheit eine externe Rechner-Schnittstelle zum Anschluss an einen Rechner aufweist, z.B. einen USB-Anschluss. Diese externe Rechner-Schnittstelle kann zumindest einer Schnittstelle zu dem Haushaltsgerät entsprechen oder eine separate Schnittstelle sein. Über die Rechner-Schnittstelle kann die portable Bedieneinheit aktualisiert werden, beispielsweise durch ein Hinzufügen weiterer Geräte, mit denen die portable Bedieneinheit zusammenarbeiten kann, oder durch eine Aktualisierung der Konfiguration der portablen Bedieneinheit (z.B. durch neue Rezepte zur Durchführung von Garprogrammen eines Backofens). Es ist eine Ausgestaltung, dass die portable Bedieneinheit über den Rechner mit einem Netzwerk wie z. B. dem Internet verbunden sein kann.

Es kann eine weitere Ausgestaltung sein, dass die portable Bedieneinheit eine einheitlich gestaltete Bedienerführung für die bedienbaren Haushaltsgeräte aufweist. Eine einheitliche Bedienerführung kann optisch nach dem gleichen Muster oder Design aufgebaute Anzeigeninhalte und / oder nach dem gleichen Konzept aufgebaute Menüstrukturen umfassen. Dadurch kann eine vertraute Bedienerführung für einige oder alle durch die portable Bedieneinheit bedienbaren Haushaltsgeräte erreicht werden, was einen Bedienkomfort erhöht.

Es kann ferner eine Ausgestaltung sein, dass die portable Bedieneinheit eine Kommunikationseinheit zur In-Haus-Kommunikation mit zu erkennenden Haushaltsgeräten aufweist, falls die portable Bedieneinheit nicht an eines der zu erkennenden Haushaltsgeräte angedockt ist. Dadurch kann eine portable Bedieneinheit beispielsweise zur Statusüberwachung von Haushaltsgeräten eingesetzt werden, wenn sie nicht zur Bedienung eines bestimmten Haushaltsgeräts eingesetzt wird.

Die Andockstation kann beispielsweise eine mechanische Halterung und / oder eine magnetische Halterung zur Befestigung der portablen Bedieneinheit bereitstellen. Eine mechanische Halterung kann eine Einsteck- oder Einschubeinheit (z.B. eine sog. Cradle), einen Auflageeinheit (z.B. eine Mulde), eine Einhängeeinheit und / oder eine Einrasteinheit usw. umfassen.

Es ist eine Ausgestaltung, dass die Andockstation in eine Frontseite des Haushaltsgeräts integriert ist und eine aus der Frontseite hervorstehende Aufsatzfläche zum Aufsatz der portablen Bedieneinheit aufweist. Dadurch kann ein sicherer Stand der portablen Bedieneinheit erreicht werden.

Es ist noch eine Ausgestaltung, dass die Andockstation in eine Frontseite des Haushaltsgeräts integriert ist und einen Klappmechanismus zum Ausklappen der portablen Bedieneinheit aus einer im Wesentlichen senkrechten Stellung aufweist. Dadurch kann insbesondere bei tiefer angeordneten Haushaltsgeräten, insbesondere Unterbaugeräten, eine Bedienung vereinfacht werden, da die portable Bedieneinheit zu einem Benutzer hin verschwenkbar ist, was eine Handhabung erleichtert.

Alternativ kann der Klappmechanismus auch in die portable Bedieneinheit integriert sein (z. B. an einer Rückseite), um so die Frontseite des Haushaltsgeräts preiswert, einfach reinigbar und hochwertig anmutend zu halten.

Der Klappmechanismus kann so ausgestaltet sein, dass er als ein Stützmechanismus zur Aufstellung der portablen Bedieneinheit auf einer freien Fläche nutzbar ist. Dies weist den Vorteil auf, dass die portable Bedieneinheit (z.B. zur Statusüberwachung) auch unabhängig von einer Andockstation sicher und ergonomisch vorteilhaft positionierbar ist.

Eine weitere Ausprägung kann es sein, dass die Andockstation in eine Frontseite des Haushaltsgeräts integriert ist und eine nach oben schräg gerichtete Oberfläche bzw. einen nach oben schräg gestellten Bereich aufweist, an welcher die portable Bedieneinheit lösbar befestigbar ist. Dadurch kann ein Benutzer auch ohne einen Klappmechanismus einen komfortablen Einblickwinkel auf die portable Bedieneinheit erlangen. Der schräggestellte Bereich lässt sich ebenfalls gut reinigen und kann gestalterisch dezent ausgeführt sein. Ein Vorsehen des schräggestellten Bereichs kann insbesondere bei Unterbaugeräten, speziell bei einem Backofen, vorteilhaft sein.

Es ist eine weitere Ausgestaltung, dass das Haushaltsgerät außer der portablen Bedieneinheit mindestens ein weiteres, fest installiertes Bedien- und / oder Anzeigenelement aufweist. Dadurch kann eine zumindest rudimentäre Bedienung des Haushaltsgeräts auch bei einem Fehlen der portablen Bedieneinheit (z.B. bei einem Verlust oder bei einem niedrigen Ladepegel der portablen Bedieneinheit) aufrechterhalten werden. Aus Sicherheitsgründen wird es besonders bevorzugt, wenn das mindestens eine fest installierte Bedien- und / oder Anzeigenelement einen Hauptschalter umfasst.

In den folgenden Figuren wird die Erfindung anhand eines Ausführungsbeispiels schematisch beschrieben. Dabei können zur Übersichtlichkeit gleiche oder gleichwirkende Elemente mit gleichen Bezugszeichen versehen sein.
- Fig.1: zeigt in Ansicht von schräg vorne eine Einbauküche mit mehreren Haushaltsgeräten, von denen zwei mit einer portablen Bedieneinheit ausgerüstet sind;
- Fig.2: zeigt die Einbauküche aus Fig.1, wobei nun zwei andere Haushaltsgeräte mit einer portablen Bedieneinheit ausgerüstet sind.

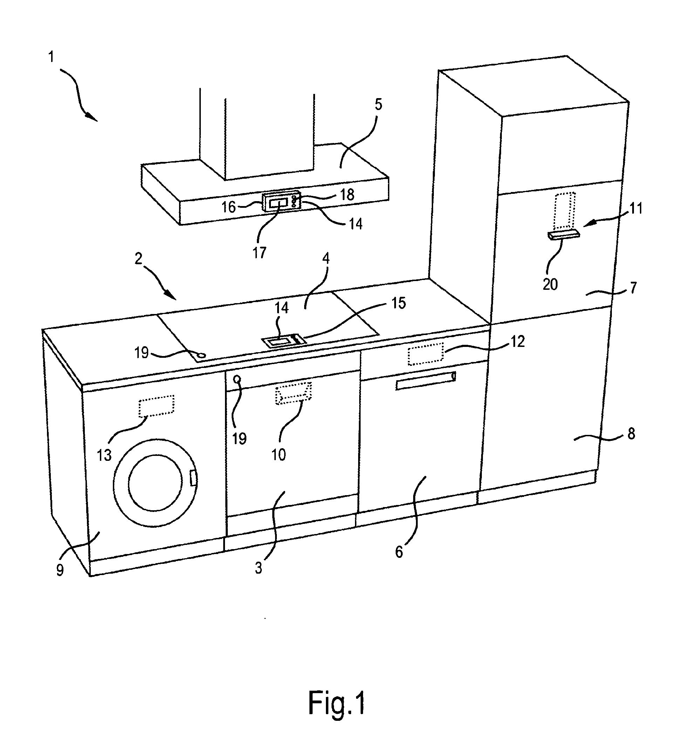

**Fig.1** zeigt in Ansicht von schräg vorne eine Einbauküche 1 mit mehreren Haushaltsgeräten in Form von Küchengeräten, nämlich einen Herd 2 mit einem Backofen 3 und einem Kochfeld 4, eine Dunstabzugshaube oder Esse 5, eine Geschirrspülmaschine 6, einen Kühlschrank 7 und eine Gefriertruhe 8. In die Einbauküche 1 ist ferner eine Waschmaschine 9 integriert. Jedes der Haushaltsgeräte 3 bis 9 weist eine hier gestrichelt angedeutete Andockstation 10 bis 13 auf. An den Andockstationen 15, 16 des Kochfelds 4 bzw. der Esse 5 sind portable Bedieneinheiten 14 angedockt. Die portablen Bedieneinheiten 14 sind gleichartig ausgestaltet und jeweils in der Lage, an jedem der mit einer Andockstation 10 bis 13, 15, 16 ausgerüsteten Haushaltsgeräte 3 bis 9 anzudocken.

Zur Bedienung eines der Haushaltsgeräte 3 bis 9 ist vorgesehen, eine portable Bedieneinheit 14 an die zugehörige Andockstation 10 bis 13, 15, 16 anzudocken und dadurch daran zu befestigen. Die Befestigung kann beispielsweise mechanisch (durch Einschieben, Auflegen, Anhängen, Einrasten usw.) oder magnetisch erfolgen und von der Art des Haushaltsgeräts 3 bis 9 abhängen.

So wird die portable Bedieneinheit 14 zum Andocken an das Kochfeld 4 in eine Andockstation in Form einer oberseitigen Mulde 15 des Kochfelds 4 eingelegt und dort magnetisch gehalten. Durch das Andocken wird ein kurzreichweitiger drahtloser Kommunikationskanal zwischen dem Kochfeld 4 und der portablen Bedieneinheit 14 geöffnet. Dazu weisen die beiden Geräte 4, 14 jeweils eine drahtlose Schnittstelle auf. Ferner kann drahtlos Energie von dem Kochfeld 4 auf die portable Bedieneinheit 14 übertragen werden, z.B. zum Aufladen eines Akkumulators der portablen Bedieneinheit 14. Das Kochfeld 4 weist zu diesem Zweck eine Magnetfeld-Erzeugungseinheit (o. Abb.) zur Erzeugung eines Magnetfelds am Ort der portablen Bedieneinheit 14 auf, während die portable Bedieneinheit 14 ein Energieaufnahmemittel in Form mindestens einer Induktionsspule (o. Abb.) zum Abgriff von Energie aus dem Magnetfeld aufweist. Die Magnetfeld-Erzeugungseinheit und die mindestens eine Induktionsspule können einen Teil der jeweiligen Schnittstelle darstellen.

Mit dem Öffnen des Kommunikationskanals erkennt die portable Bedieneinheit 14 das Kochfeld 4 und konfiguriert sich so, dass es als eine Bedieneinheit nur des Kochfelds 4 erscheint. Dazu werden entsprechende Bedienoberflächen zur Bedienung nur des Kochfelds 4 angezeigt.

Zur Erkennung des mit ihr kommunikativ verbundenen Haushaltsgeräts 4, 5 ist die portable Bedieneinheit 14 mit einem Erkennungsmittel ausgerüstet. Das Konfigurationsmittel kann beispielsweise einen Datenspeicher umfassen. In dem Datenspeicher kann beispielsweise eine Nachschlagetabelle gespeichert sein, welche eine über den Kommunikationskanal empfangene Kennung mit einem vorbestimmten Haushaltsgerät verknüpft. Die Kennung kann zumindest teilweise auch in Klartext übermittelt werden.

Zu ihrer Konfiguration auf das mit ihr kommunikativ verbundene Haushaltsgerät 4, 5 ist die jeweilige portable Bedieneinheit 14 ferner mit einem Konfigurationsmittel ausgerüstet. Das Konfigurationsmittel kann beispielsweise einen Datenspeicher umfassen, in dem zu vorbestimmten erkennbaren Haushaltsgeräten zugehörige Bedieninformationen wie Menüstrukturen, Hinweistexte, Tastenbelegungen usw. gespeichert sein können. Die Bedienabläufe können im Rahmen eines Bedienablaufs des Backofens 3 und / oder des Kochfelds 4 auch Rezepte usw. aufweisen.

Das Konfigurationsmittel und das Erkennungsmittel können in einem Konfigurations- und Erkennungsmittel kombiniert sein, welches beispielsweise einen gemeinsamen Datenspeicher aufweist.

Der Datenspeicher kann zu seiner Aktualisierung mindestens beschreibbar sein und beispielsweise als ein EEPROM vorliegen. Für eine Aktualisierung kann die portable Bedieneinheit 14 eine externe Rechner-Schnittstelle zum Anschluss an einen Rechner aufweisen, beispielsweise eine USB-Schnittstelle. Diese Rechner-Schnittstelle kann der mindestens einen Schnittstelle zur Kommunikation mit dem Haushaltsgerät 3 bis 9 entsprechen oder eine eigenständige Schnittstelle sein.

Ein Benutzer hat bei offenem Kommunikationskanal zwischen der portablen Bedieneinheit 14 und dem Kochfeld 4 keine Möglichkeit zur Bedienung oder Überwachung eines anderen der Haushaltsgeräte 3, 5 bis 9 durch diese portable Bedieneinheit 14.

Mit Abdocken bzw. Entfernen der portablen Bedieneinheit 14 von dem Kochfeld 4 bzw. aus der Mulde 15 bricht der kurzreichweitige Kommunikationskanal zusammen. Dies wird durch das Kochfeld 4 erkannt, und das Kochfeld 4 reagiert darauf zumindest mit einem Abschalten seiner zugehörigen Kochstellen, ggf. auch mit einem vollständigen Ausschalten des Kochfelds 4.

Die gleiche oder eine gleichartige portable Bedieneinheit 14 kann wie hier gezeigt auch an eine Vorderseite der Esse 5 angedockt werden, indem sie dort magnetisch gehalten wird. Durch das Andocken erkennt die portable Bedieneinheit 14 die Esse 5 und konfiguriert sich so, dass sie als eine Bedieneinheit nur der Esse 5 erscheint. Ein Benutzer hat keine Möglichkeit zur Bedienung oder Überwachung eines anderen der Haushaltsgeräte 3, 4, 6 bis 9. Mit Abdocken bzw. Entfernen der portablen Bedieneinheit 14 von der Esse 5 schaltet sich die Esse 5 aus.

Die portable Bedieneinheit 14 ist auch mit einer Kommunikationseinheit zur In-House-Kommunikation ausgerüstet, z.B. mit einem Bluetooth-Transceiver, so dass sie mit einem oder mehreren Haushaltsgeräten 3 bis 9 über eine größere Entfernung, z. B. von bis zu ca. 10 m oder 20 m, kommunizieren kann, falls sie nicht an eines dieser Haushaltsgeräte 3 bis 9 angedockt ist. Die Kommunikation kann auch mit Haushaltsgeräten 3 bis 9 erfolgen, an welche bereits eine andere portable Bedieneinheit 14 angedockt ist. Die Kommunikation zwischen dem Haushaltsgerät 3 bis 9 und der nicht-angedockten portablen Bedieneinheit 14 kann dann über die Kommunikationseinheiten zur In-House-Kommunikation der angedockten portablen Bedieneinheit 14 und der nicht-angedockten portablen Bedieneinheit 14 laufen. Die nicht-angedockte portable Bedieneinheit 14 kann beispielsweise zur Statusabfrage (Restdauer eines Garvorgangs, Restdauer eines Waschgangs usw.) verwendet werden.

Eine portable Bedieneinheit 14 kann bei einem Kauf eines der Haushaltsgeräte 3 bis 9 beiliegen, so dass ein Benutzer nach einem Kauf mehrerer zur Zusammenarbeit mit der portablen Bedieneinheit 14 eingerichteten und ausgerüsteten Haushaltsgeräte 3 bis 9 auch mehrere portable Bedieneinheiten 14 besitzt. Falls nicht alle so eingerichteten Haushaltsgeräte 3 bis 9 gleichzeitig betrieben werden, sind portable Bedieneinheiten 14 übrig, welche z.B. zur Statusüberwachung verwendet werden können. Zum Andocken an eines der Haushaltsgeräte 3 bis 9 kann jede der beiliegenden portablen Bedieneinheiten 14 verwendet werden.

Die portable Bedieneinheit 14 weist hier als die Anzeigeneinheit einen LCD-Bildschirm 17 sowie als Bedienelemente mechanische Kurzhubtasten 18 auf. Zumindest der Backofen 3 und das Kochfeld 4 weisen zu ihrer Bedienung noch ein weiteres Bedienelement in Form eines Ein/Aus-Schalters 19 auf.

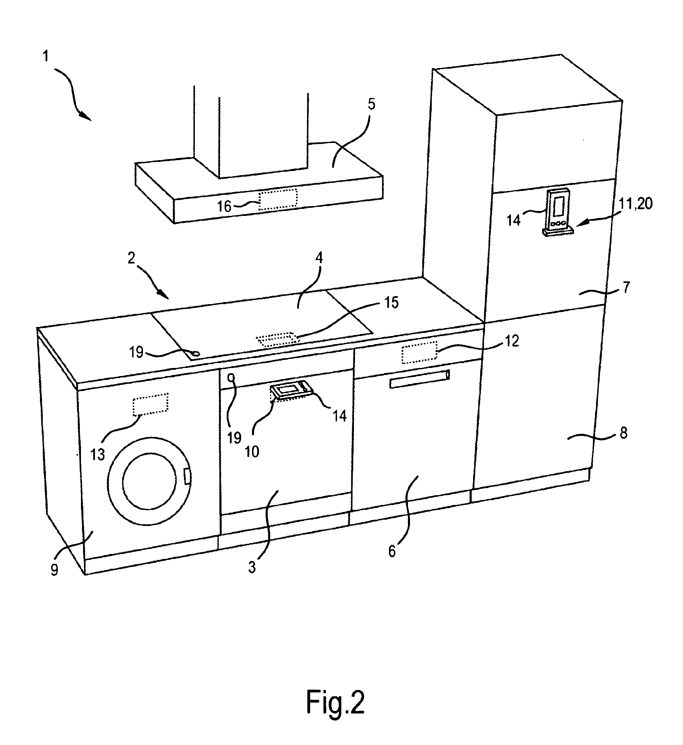

**Fig.2** zeigt die Einbauküche 1 aus Fig.1, wobei nun andere Haushaltsgeräte mit einer portablen Bedieneinheit 14 ausgerüstet sind, nämlich der Backofen 3 und der Kühlschrank 7.

Die Andockstation 11 des Kühlschranks 7 ist so ausgestaltet, dass sie eine aus der Frontseite hervorstehende Aufsatzfläche 20 zum Aufsatz der portablen Bedieneinheit 14 aufweist. In die Aufsatzfläche 20 ist ein Stecker (o. Abb.) als die drahtgebundene Schnittstelle eingelassen, auf den eine passende Buchse als die drahtgebundene Schnittstelle der portablen Bedieneinheit14 aufsetzbar ist, und zwar sowohl zur Datenkommunikation zwischen dem Kühlschrank 7 und der portablen Bedieneinheit 14 als auch zur Stromversorgung der portablen Bedieneinheit 14. Durch die Aufsatzfläche 20 kann, z. B. ähnlich einer sog. 'Cradle', ein sicherer Stand der portablen Bedieneinheit 14 erreicht werden. Die Andockstation 11 kann zudem mit einer oberhalb der Aufsatzfläche 20 in der Frontseite des Kühlschranks 7 ausgebildeten Vertiefung (o. Abb.) versehen sein, um einen sicheren Sitz der portablen Bedieneinheit 14 zu unterstützen.

Die Andockstation 10 des Backofens 3 ist in eine Frontseite des Backofens 3 integriert und weist einen Klappmechanismus (o. Abb.) zum Ausklappen der portablen Bedieneinheit 14 aus einer im Wesentlichen senkrechten Stellung zu einem Benutzer hin auf. Die portable Bedieneinheit 14 ist hier in der ausgeklappten Stellung gezeigt, in der ein Benutzer den Backofen 3 bequem im Stehen bedienen kann.

Selbstverständlich ist die vorliegende Erfindung nicht auf das gezeigte Ausführungsbeispiel beschränkt.

So mag die portable Bedieneinheit in einer anderen Ausgestaltung nur eine (drahtgebundene oder drahtlose) externe Schnittstelle mit dem Haushaltsgerät aufweisen.

Die portable Bedieneinheit kann auch lediglich einen Touchscreen anstelle getrennter Bedienelemente und Anzeigenfeld(er) aufweisen.

Die portable Bedieneinheit kann zur Anpassung an gekrümmte Oberflächen biegsam sein.

Die portable Bedieneinheit kann abhängig von dem angedockten Haushaltsgerät bei einer Entfernung der portablen Bedieneinheit weiterlaufen oder sich ausschalten. Ein Ausschalten wird insbesondere im Falle eines Kochfelds bevorzugt.

### Bezugszeichenliste

1 Einbauküche
2 Herd
3 Backofen
4 Kochfeld
5 Esse
6 Geschirrspülmaschine
7 Kühlschrank
8 Gefriertruhe
9 Waschmaschine
10 Andockstation
11 Andockstation
12 Andockstation
13 Andockstation
14 portable Bedieneinheit
15 Andockstation / Mulde des Kochfelds
16 Andockstation
17 LCD-Bildschirm
18 Kurzhubtaste
19 Ein/Aus-Schalter
20 Aufsatzfläche

## Patentansprüche

1. Verfahren zum Betreiben eines Haushaltsgeräts (2-9), wobei das Verfahren die folgenden Schritte aufweist:
- Andocken einer portablen Bedieneinheit (14) an das Haushaltsgerät (2-9), wobei die portable Bedieneinheit (14) einen Bildschirm (17) aufweist;
- Erkennen des Haushaltsgeräts (2-9) durch die portable Bedieneinheit (14);
- Konfigurieren der portablen Bedieneinheit (14) nur zur Bedienung dieses Haushaltsgeräts (2-9), wobei auf dem Bildschirm (17) der Bedieneinheit (14) eine entsprechende Bedienoberfläche zur Bedienung nur dieses Haushaltsgeräts (2-9) angezeigt wird;
- Abdocken der portablen Bedieneinheit (14) von dem Haushaltsgerät (2-9) und dadurch
- Ausschalten des Haushaltsgeräts (2-9).

2. Verfahren nach Anspruch 1, wobei die portable Bedieneinheit (14) ferner mindestens aufweist:
- mindestens ein Andockmittel zum Andocken an das Haushaltsgerät (2-9);
- ein Erkennungsmittel zum Erkennen des Haushaltsgeräts (2-9) und
- ein Konfigurationsmittel zu ihrer Konfiguration zur Bedienung dieses Haushaltsgeräts (2-9) und wobei
- die portable Bedieneinheit (14) eine Rechner-Schnittstelle zum Anschluss an einen Rechner aufweist.

3. Verfahren nach Anspruch 2, wobei das Andockmittel eine drahtgebundene externe Schnittstelle umfasst.

4. Verfahren nach einem der Ansprüche 2 bis 3, wobei das Andockmittel eine kurzreichweitige drahtlose externe Schnittstelle umfasst.

5. Verfahren nach einem der vorhergehenden Ansprüche, wobei der Bildschirm (17) ein berührungsempfindlicher Bildschirm ist.

6. Verfahren nach einem der Ansprüche 2 bis 5, wobei portable Bedieneinheit (14) eine einheitliche Bedienerführung für mehrere bedienbare Haushaltsgeräte (2-9) aufweist.

7. Verfahren nach einem der Ansprüche 2 bis 6, wobei sie eine Kommunikationseinheit zur In-Haus-Kommunikation mit zu erkennenden Haushaltsgeräten (2-9) aufweist, falls die portable Bedieneinheit (14) nicht an eines der zu erkennenden Haushaltsgeräte (2-9) angedockt ist.

8. Verfahren nach einem der vorhergehenden Ansprüche, wobei das Haushaltsgerät (2-9) eine Andockstation (10-13, 15, 16) zum Andocken einer portablen Bedieneinheit (14) aufweist und wobei die Andockstation (10-13, 15, 16) in eine Frontseite des Haushaltsgeräts (2-9) integriert wird.

9. Verfahren nach Anspruch 8, wobei die Andockstation (10-13, 15, 16) eine aus der Frontseite hervorstehende Aufsatzfläche (20) zum Aufsatz der portablen Bedieneinheit (14) aufweist.

10. Verfahren nach Anspruch 8, wobei die Andockstation (10-13, 15, 16) einen Klappmechanismus zum Ausklappen der portablen Bedieneinheit (14) aus einer im Wesentlichen senkrechten Stellung aufweist.

11. Verfahren nach Anspruch 8, wobei die Andockstation eine nach oben schräg gerichtete Oberfläche zur Befestigung der portablen Bedieneinheit aufweist.

12. Verfahren nach einem der vorhergehenden Ansprüche 8 bis 11, **dadurch gekennzeichnet, dass** das Haushaltsgerät (2-9) mindestens ein fest installiertes Bedien- und / oder Anzeigenelement aufweist.

## Claims

1. Method for operating a household appliance (2-9), wherein the method comprises the following steps:
- docking a portable operating unit (14) to the household appliance (2-9), the portable operating unit (14) having a screen (17);
- identifying the household appliance (2-9) by means of the portable operating unit (14);
- configuring the portable operating unit (14) for operating said household appliance (2-9) only, a corresponding operating surface for operating said household appliance (2-9) only being displayed on the screen (17) of the operating unit (14);
- undocking the portable operating unit (14) from the household appliance (2-9) and thereby
- switching off the household appliance (2-9).

2. Method according to claim 1, wherein the portable operating unit (14) at least further comprises:
- at least one docking means for docking to the household appliance (2-9);
- one identification means for identifying the household appliance (2-9) and
- one configuration means for the configuration thereof for operating said household appliance (2-9) and wherein
- the portable operating unit (14) comprises a computer interface for connecting to a computer.

3. Method according to claim 2, wherein the docking means comprises a wired external interface.

4. Method according to one of claims 2 to 3, wherein the docking means comprises a short-range wireless external interface.

5. Method according to one of the preceding claims, wherein the screen (17) is a touch-sensitive screen.

6. Method according to one of claims 2 to 5, wherein the portable operating unit (14) comprises a standardised user guide for several household appliances (2-9) which are able to be operated.

7. Method according to one of claims 2 to 6, wherein it comprises a communication unit for in-house communication with household appliances (2-9) to be identified, if the portable operating unit (14) is not docked to one of the household appliances (2-9) to be identified.

8. Method according to one of the preceding claims, wherein the household appliance (2-9) has a docking station (10-13, 15, 16) for docking a portable operating unit (14) and wherein the docking station (10-13, 15, 16) is integrated in a front face of the household appliance (2-9).

9. Method according to claim 8, wherein the docking station (10-13, 15, 16) comprises a mounting surface (20) protruding from the front face for positioning the portable operating unit (14).

10. Method according to claim 8, wherein the docking station (10-13, 15, 16) comprises a folding mechanism for folding out the portable operating unit (14) from a substantially perpendicular position.

11. Method according to claim 8, wherein the docking station comprises a surface oriented obliquely upward for fastening the portable operating unit.

12. Method according to one of the preceding claims 8 to 11, **characterised in that** the household appliance (2-9) comprises at least one fixedly installed operating and/or display element.

## Revendications

1. Procédé de fonctionnement d'un appareil ménager (2-9), le procédé présentant les étapes suivantes :
- insertion d'une unité de commande portable (14) sur l'appareil ménager (2-9), l'unité de commande portable (14) présentant un écran (17) ;
- identification de l'appareil ménager (2-9) par l'unité de commande portable (14) ;
- configuration de l'unité de commande portable (14) seulement pour la commande de cet appareil ménager (2-9), une interface utilisateur correspondante étant affichée sur l'écran pour la commande de seulement cet appareil ménager (2-9) ;
- désinsertion de l'unité de commande portable (14) de l'appareil ménager (2-9) et par conséquent
- mise hors service de l'appareil ménager (2-9).

2. Procédé selon la revendication 1, l'unité de commande portable (14) présentant en outre au moins :
- au moins un moyen d'insertion destiné à l'insertion sur l'appareil ménager (2-9) ;
- un moyen d'identification destiné à identifier l'appareil ménager (2-9) et
- un moyen de configuration pour sa configuration dans le but de commander cet appareil ménager (2-9) et
- l'unité de commande portable (14) présentant une interface d'ordinateur pour la connexion à un ordinateur.

3. Procédé selon la revendication 2, le moyen d'insertion comprenant une interface externe reliée par câble.

4. Procédé selon l'une quelconque des revendications 2 à 3, le moyen d'insertion comprenant une interface externe sans fil de courte portée.

5. Procédé selon l'une quelconque des revendications précédentes, l'écran (17) étant un écran tactile.

6. Procédé selon l'une quelconque des revendications 2 à 5, l'unité de commande portable (14) présentant un guide utilisateur uniforme pour plusieurs appareils ménagers commandables (2-9).

7. Procédé selon l'une quelconque des revendications 2 à 6, présentant une unité de communication pour la communication interne avec des appareils ménagers (2-9) à identifier, au cas où l'unité de commande portable (14) n'est pas insérée sur l'un des appareils ménagers (2-9) à identifier.

8. Procédé selon l'une quelconque des revendications précédentes, l'appareil ménager (2-9) présentant une station d'insertion (10-13, 15, 16) destinée à l'insertion d'une unité de commande portable (14) et la station d'insertion (10-13, 15, 16) étant intégrée dans un côté frontal de l'appareil ménager (2-9).

9. Procédé selon la revendication 8, la station d'insertion (10-13, 15, 16) présentant une surface d'appui (20) en saillie du côté frontal pour la pose de l'unité de commande portable (14).

10. Procédé selon la revendication 8, la station d'insertion (10-13, 15, 16) présentant un mécanisme à rabat pour faire déployer l'unité de commande portable (14) à partir d'une position essentiellement verticale.

11. Procédé selon la revendication 8, la station d'insertion présentant une surface orientée de manière inclinée vers le haut pour la fixation de l'unité de commande portable.

12. Procédé selon l'une quelconque des revendications 8 à 11, **caractérisé en ce que** l'appareil ménager (2-9) présente au moins un élément de commande et/ou d'affichage installé de manière fixe.
